(19) **Europäisches Patentamt**
**European Patent Office**
**Office européen des brevets**

(11) **EP 4 276 718 A1**

(12) **EUROPEAN PATENT APPLICATION**

(43) Date of publication:
**15.11.2023 Bulletin 2023/46**

(21) Application number: **23169959.6**

(22) Date of filing: **26.04.2023**

(51) International Patent Classification (IPC):
**G06Q 10/0631** $^{(2023.01)}$    **G06Q 10/0639** $^{(2023.01)}$
**G06Q 50/04** $^{(2012.01)}$

(52) Cooperative Patent Classification (CPC):
**G06Q 10/06311; G06Q 10/06316; G06Q 10/06393;
G06Q 10/06398; G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022 JP 2022078244**

(71) Applicant: **OMRON Corporation
Kyoto 600-8530 (JP)**

(72) Inventors:
• **UJITA, Yasuhiro
Kyoto-shi, 600-8530 (JP)**
• **FUJIMOTO, Shinya
Kyoto-shi, 600-8530 (JP)**

(74) Representative: **Isarpatent
Patent- und Rechtsanwälte Barth
Charles Hassa Peckmann & Partner mbB
Friedrichstrasse 31
80801 München (DE)**

(54) **PRODUCTION MANAGEMENT SUPPORT SYSTEM**

(57) Production is performed without lowering the operating rate of a facility that operates with an auxiliary operation performed by a human and the operating rate of an operator to improve productivity. A production management support system supports management of a production process including a process assigned to an operator and a process assigned to a facility including an auxiliary operation performed by a human. The system includes a facility operation information obtainer that obtains facility operation information about an operating state of the facility, an operator operation information obtainer that obtains operator operation information about an operating state of the operator, an operation prioritizer that determines, based on the facility operation information and the operator operation information, whether to prioritize an operation associated with the process assigned to the operator or the auxiliary operation, and a notifier that notifies the operator of a determination that the auxiliary operation is prioritized.

FIG. 1

**Description**

The present invention relates to a production management support system.

BACKGROUND

On a production line including a combination of an operation process performed by a semiautomatic machine and an operation process performed by an operator, an operation completed by the semiautomatic machine may be followed by an auxiliary operation performed by the operator, such as collecting a completed workpiece or providing a workpiece for a subsequent operation. When the semiautomatic machine is inefficient, a pause or a wait in the machine is to be avoided by the operator performing operations. This may cause the operator to suspend other assigned processes. Any such suspended process causes an omission of an intended operation, possibly producing defective products.

In response to this, techniques have been developed for calculating the progress of an operation in a production process involving both an operator and an automatic machine (robot), determining whether the operation is being performed as planned and rearranging robot jobs and human operation instructions based on the status or progress of the operation (refer to Patent Literature 1), and determining whether an operation is being performed as planned and calling for an operator when the operation is not performed as planned (refer to Patent Literature 2). However, no determination criteria are described for determining, when the semiautomatic machine is in a wait state, whether the operator is to suspend an assigned operation and assist the semiautomatic machine or to continue an assigned operation.

CITATION LIST

PATENT LITERATURE

Patent Literature 1: Japanese Unexamined Patent Application Publication No. 2021-93957
Patent Literature 2: Japanese Unexamined Patent Application Publication No. 2015-119646

SUMMARY

TECHNICAL PROBLEM

In response to the above issue, one or more aspects of the present invention are directed to allowing production without the operating rate of a facility that operates with an auxiliary operation performed by a human and the operating rate of the operator being lowered and to improving productivity.

SOLUTION TO PROBLEM

A production management support system according to an aspect of the present invention is a system for supporting management of a production process including a process assigned to an operator and a process assigned to a facility. The process assigned to the facility includes an auxiliary operation performed by a human. The production management support system includes a facility operation information obtainer that obtains facility operation information about an operating state of the facility, an operator operation information obtainer that obtains operator operation information about an operating state of the operator, an operation prioritizer that determines, based on the facility operation information and the operator operation information, whether to prioritize an operation associated with the process assigned to the operator or the auxiliary operation, and a notifier that notifies the operator of a determination that the auxiliary operation is prioritized.

In the production process including the process assigned to the operator and the process assigned to the facility including an auxiliary operation performed by a human, the above structure allows the operation prioritizer to determine whether to prioritize the operation associated with the process assigned to the operator or the auxiliary operation for assisting the facility based on the facility operation information indicating the operating state of the facility and the operator operation information indicating the operating state of the operator. In response to the auxiliary operation being prioritized, the notifier notifies the operator of the operation being prioritized. The structure thus allows production without the operating rates of both the facility and the operator being lowered, and improves productivity.

The production management support system according to the above aspect of the present invention may further include a facility production plan obtainer that obtains facility production plan information being production plan information about the facility, an operator production plan obtainer that obtains operator production plan information being production plan information about the operator, a first evaluation index calculator that calculates, based on the facility operation information and the facility production plan information, a facility productivity evaluation index to evaluate productivity of the facility, and a second evaluation index calculator that calculates, based on the operator operation information and the operator production plan information, an operator productivity evaluation index to evaluate productivity of the operator. The operation prioritizer may determine, based on the facility productivity evaluation index and the operator productivity evaluation index, whether to prioritize the operation associated with the process assigned to the operator or the auxiliary operation.

This structure allows the operation prioritizer to more accurately determine, based on the facility productivity evaluation index for evaluating the productivity of the facility using the facility operation information and the production plan information about the facility and the operator productivity evaluation index for evaluating the productivity of the operator using the operator operation information and the production plan information about the operator, whether to prioritize the operation associated with the process assigned to the operator or the auxiliary operation in accordance with a production plan. The structure thus allows production without the operating rates of both the facility and the operator being lowered, and improves productivity.

In the above aspect of the present invention, the operation prioritizer may determine, based on the facility productivity evaluation index and the operator productivity evaluation index obtained in a predetermined time slot preceding the determination, whether to prioritize the operation associated with the process assigned to the operator or the auxiliary operation.

This structure determines whether to prioritize the operation associated with the process assigned to the operator or the auxiliary operation based on the facility productivity evaluation index and the operator productivity evaluation index obtained in the predetermined time slot immediately preceding the determination. This prioritization is more accurate when the operating rates are substantially similar over a long time but are lower in the immediately preceding time slot. This allows production without the operating rates of both the facility and the operator being lowered, and improves productivity.

In the above aspect of the present invention, the operation prioritizer may determine, based on the facility productivity evaluation index and the operator productivity evaluation index weighted based on a length of time preceding the determination, whether to prioritize the operation associated with the process assigned to the operator or the auxiliary operation.

This structure determines whether to prioritize the operation associated with the process assigned to the operator or the auxiliary operation based on the facility productivity evaluation index and the operator productivity evaluation index weighted based on the length of time preceding the determination. This prioritization is more accurate when the operating rates are substantially similar over a long time but are lower in the immediately preceding time slot. This allows production without the operating rates of both the facility and the operator being lowered, and improves productivity.

In the above aspect of the present invention, the operation prioritizer may determine whether to prioritize the operation associated with the process assigned to the operator or the auxiliary operation based on the facility operating information excluding a stop time of the facility.

This structure excludes a stop time of the facility in evaluating the operating state of the facility when the facility stops unexpectedly and may cause estimation of a lower operating rate. This allows more accurate determination as to whether to prioritize the operation associated with the process assigned to the operator or the auxiliary operation. This allows production without the operating rates of both the facility and the operator being lowered, and improves productivity.

The production management support system according to the above aspect of the present invention may further include a first evaluation index calculator that calculates a facility productivity evaluation index to evaluate productivity of the facility based on the facility operation information and production plan information about the facility, a second evaluation index calculator that calculates an operator productivity evaluation index to evaluate productivity of the operator based on the operator operation information and production plan information about the operator, a lower productivity determiner that determines whether the facility productivity evaluation index and the operator productivity evaluation index satisfy a predetermined condition indicating lower productivity, and a manager notifier that notifies a manager of a determination that the predetermined condition is satisfied.

This structure allows the manager notifier to notify the manager of any lower productivity of both the facility and the operator that can possibly cause a failure to achieve a planned quantity for the manager to proactively reduce a failure to achieve the planned quantity.

ADVANTAGEOUS EFFECTS

The system according to the above aspects of the present invention allows production without the operating rate of the facility that operates with an auxiliary operation performed by a human and the operating rate of the operator being lowered, and improves productivity.

BRIEF DESCRIPTION OF THE DRAWINGS

FIG. 1 is a schematic diagram of a production management support system according to an embodiment of the present invention.

FIG. 2 is a functional block diagram of a processor included in the production management support system according to the embodiment of the present invention.

FIG. 3 is a diagram describing measurement of an operation time of an operator in the production management support system according to the embodiment of the present invention.

FIG. 4A is a graph showing the relationship between the target achievement rate of a semiautomatic machine and a threshold in the embodiment of the present invention, and FIG. 4B is a graph showing the relationship between the target achievement rate of the operator and a threshold in the embodiment of the present invention.

DETAILED DESCRIPTION

Example Use

An example use of a production management support system 1 according to an embodiment of the present invention will now be described with reference to the drawings.

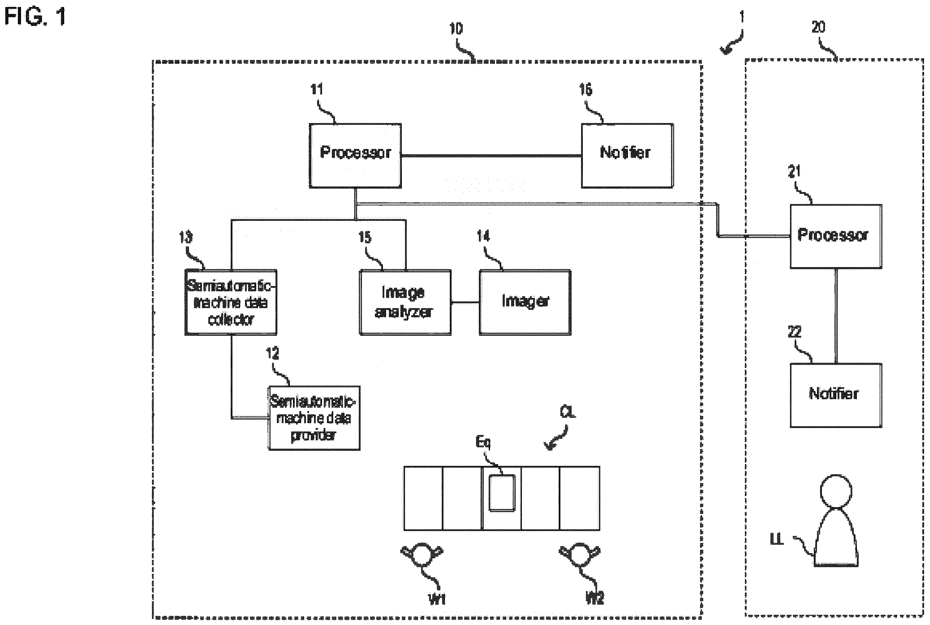

As shown in FIG. 1, the production management support system 1 supports management of a production process on a cell line CL. The cell line CL includes a combination of processes assigned to the operators W1 and W2 and a process assigned to a semiautomatic machine Eq that operates with auxiliary operations performed by the operator W1 such as preparation and collection of workpieces.

The production management support system 1 mainly includes a production line 10 and an office 20. The production line 10 includes the cell line CL, a semiautomatic-machine data collector 13 that collects data about the semiautomatic machine Eq, a semiautomatic-machine data provider 12 that provides data about the semiautomatic machine Eq to the semiautomatic-machine data collector 13, an imager 14, an image analyzer 15, a processor 11, and a notifier 16.

The office 20 is a room for a manager LL for the production line 10 including the cell line CL, such as a production line leader or production engineering personnel. The office 20 includes a processor 21 and a notifier 22 that are connected to the processor 11 in the production line 10 with a network.

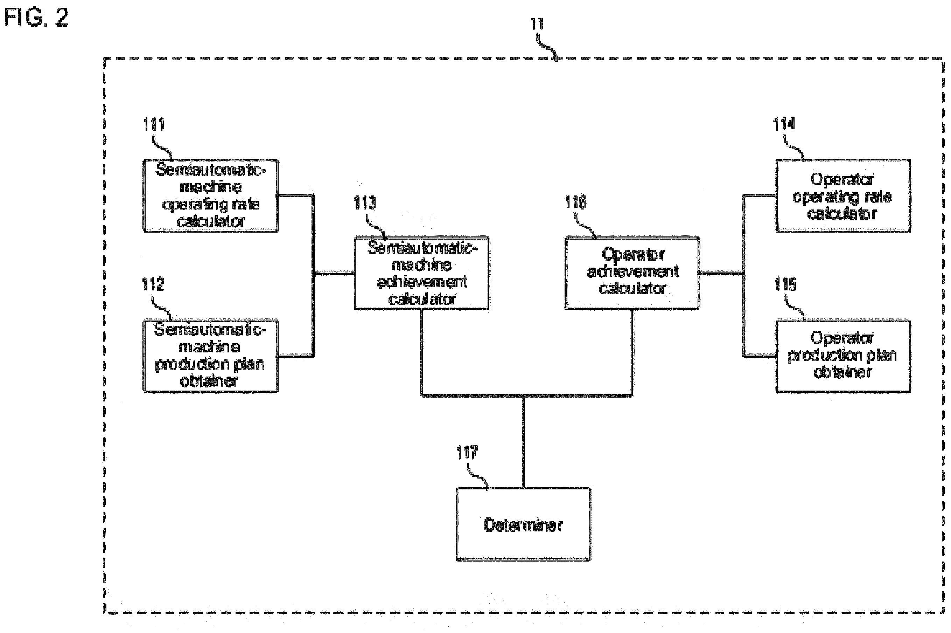

The processor 11 includes a common computer and the functional components shown in FIG. 2.

The processor 11 includes a semiautomatic-machine operating rate calculator 111, a semiautomatic-machine production plan obtainer 112, a semiautomatic-machine achievement calculator 113, an operator operating rate calculator 114, an operator production plan obtainer 115, an operator achievement calculator 116, and a determiner 117.

The semiautomatic-machine operating rate calculator 111 calculates a recorded operating rate of the semiautomatic machine Eq using information about the operation of the semiautomatic machine Eq collected by the semiautomatic-machine data collector 13. The semiautomatic-machine achievement calculator 113 calculates a target achievement rate for the semiautomatic machine Eq using the recorded operating rate of the semiautomatic machine Eq calculated by the semiautomatic-machine operating rate calculator 111 and the target operating rate of the semiautomatic machine Eq obtained from the semiautomatic-machine production plan obtainer 112.

The operator operating rate calculator 114 calculates a recorded operating rate of the operator W1 (the same applies to the operator W2) using the operating time (recorded time) and the resultant production quantity detected by the image analyzer 15 analyzing image data obtained by the imager 14. The operator achievement calculator 116 calculates a target achievement rate of the operator W1 using the recorded operating rate of the operator W1 calculated by the operator operating rate calculator 114 and the target operating rate of the operator W1 obtained from the operator production plan obtainer 115.

The determiner 117 compares the target achievement rate of the semiautomatic machine Eq with the target achievement rate of the operator W1. In response to the target achievement rate of the semiautomatic machine Eq being higher than the target achievement rate of the operator W1, the determiner 117 determines that the operator W1 is to prioritize improving the operation assigned to the operator W1 and proceed to a subsequent process assigned to the operator W1 without returning to the semiautomatic machine Eq. In response to the target achievement rate of the semiautomatic machine Eq being lower than the target achievement rate of the operator W1, the determiner 117 determines that the operator W1 is to prioritize improving the operation of the semiautomatic machine Eq and perform an auxiliary operation for the semiautomatic machine Eq without causing a wait in the semiautomatic machine Eq. The determiner 117 thus notifies, through the notifier 16, the operator W1 of the auxiliary operation to be performed for the semiautomatic machine Eq.

In response to the target achievement rate of the semiautomatic machine Eq being lower than a predetermined threshold Th1 and the target achievement rate of the operator W1 also being lower than a predetermined threshold Th2, the determiner 117 detects an abnormality and notifies the production line leader or other managers working in the office 20 of the abnormality through the notifier 22.

In the manner described above, the production management support system 1 determines whether the operator W1 is to proceed with the operation assigned to the operator W1 or to perform an auxiliary operation for the semiautomatic machine Eq to avoid lower operating rates of the semiautomatic machine Eq and the operator W1. When the operator W1 is to perform an auxiliary operation for the semiautomatic machine Eq, the production management support system 1 notifies the operator W1 of the auxiliary operation to be performed. This allows production without the operating rates of both the semiautomatic machine Eq and the operator W1 being lowered, and improves productivity.

First Embodiment

The production management support system 1 according to a first embodiment of the present invention will now be described with reference to the drawings. The structures of the devices described in the present embodiment may be changed as appropriate in various conditions. In other words, the scope of the present invention is not limited to the embodiment described below.

FIG. 1 shows an overall configuration of the production management support system 1.

The production management support system 1 includes the production line 10 and the office 20. The production line 10 includes the cell line CL including a workbench on which the operators W1 and W2 operate and the semiautomatic machine Eq. The production line 10 includes the semiautomatic-machine data provider 12 including, for example, a sensor installed in the semiautomatic machine Eq, the semiautomatic-machine data collector 13 that collects data from the semiautomatic-machine data provider 12, the image analyzer 15 that performs image analysis such as path detection of the operators W1 and W2 on the cell line CL based on image information obtained from the imager 14, the processor 11 that performs the processing described later based on the data collected by the semiautomatic-machine data collector 13 and information about the operating states of the operators W1 and W2 detected by the image analyzer 15, and the notifier 16 that notifies the operators W1 and W2 on the cell line CL of information output based on the processing performed by the processor 11. The semiautomatic-machine data collector 13, the image analyzer 15, and the processor 11 are connected to the processor 21 installed in the office 20 with a network. The office 20 includes the processor 21 and the notifier 22 for providing information to a manager LL, such as a production line leader (production engineering personnel) who works in the office 20. The semiautomatic machine Eq corresponds to a facility in an aspect of the present invention. The semiautomatic-machine data provider 12, the semiautomatic-machine data collector 13, and the semiautomatic-machine operating rate calculator 111 described below correspond to a facility operation information obtainer in an aspect of the present invention. The imager 14, the image analyzer 15, and the operator operating rate calculator 114 described below correspond to an operator operation information obtainer in an aspect of the present invention.

The semiautomatic-machine data provider 12 includes, for example, an optical character reader (OCR), a barcode reader (BCR), a switch, a photoelectric sensor, or an image sensor. The semiautomatic-machine data provider 12 may include a programmable logic controller (PLC) that controls the semiautomatic machine Eq. The BCR, the switch, the photoelectric sensor, or other devices may be connected through, for example, slave terminals as appropriate for the configuration.

The image analyzer 15 generates information indicating the operating state of the operator W1 by, for example, analyzing the image information obtained from the imager 14, such as a camera, to detect the paths of the operators W1 and W2 and the production quantity of the operators W1 and W2. The paths of the operators W1 and W2 may be detected by radio-frequency identification (RFID) tags carried by the operators W1 and W2 or by any other appropriate detection method.

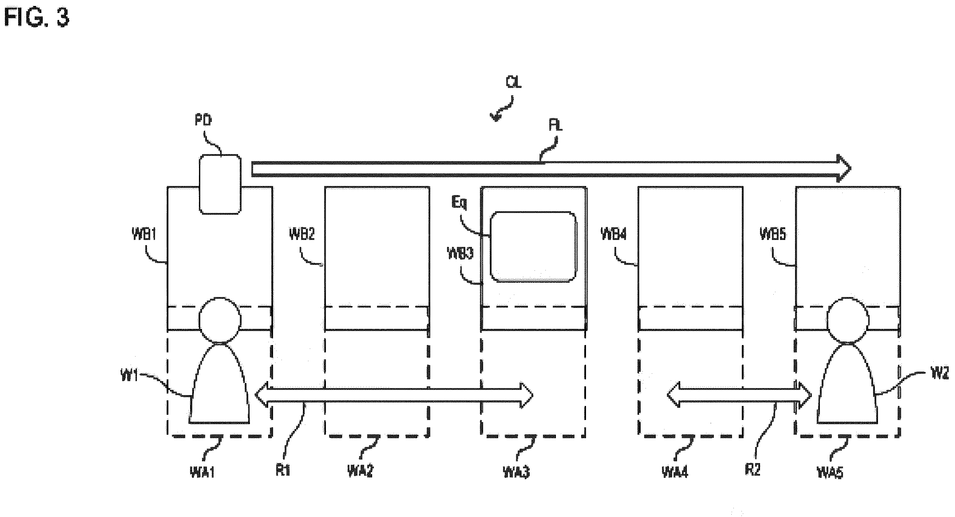

The cell line CL has, for example, the structure shown in FIG. 3. In this example, the cell line CL includes five workbenches WB1 to WB5. The operator W1 performs operations on the workbenches WB1 and WB2. The semiautomatic machine Eq is installed on the workbench WB3. The operator W2 performs operations on the workbenches WB4 and WB5. Work areas WA1, WA2, WA3, WA4, and WA5 are respectively defined in front of the workbenches WB1, WB2, WB3, WB4, and WB5. A product (also referred to as a workpiece) PD is transferred from the workbench WB1 to the workbench WB5 as indicated by arrow FL in the production process. The operator W1 moves from the workbench WB1 to the workbench WB2 as appropriate in the operation process, and also to the workbench WB3 to perform an auxiliary operation for the semiautomatic machine Eq. As indicated by arrow R1, the operator W1 moves between the operation area WA1, the operation area WA2, and the operation area WA3 as appropriate for the operation. Similarly, the operator W2 moves from the workbench WB4 to the workbench WB5 as appropriate in the operation process. As indicated by arrow R2, the operator W2 moves between the operation area WA4 and the operation area WA5 as appropriate for the operation.

The image analyzer 15 detects entry and exit of the operators W1 and W2 into and from each operation area such as the operation area WA1 by analyzing the image data from the imager 14, calculates the operating time for each operation process, and generates information about the operating states of the operators W1 and W2 such as the production quantity.

The processor 11 may include a common computer including a central processing unit (CPU), a memory, an input device, an output device, and a communication interface.

FIG. 2 is a functional block diagram of the processor 11. The processor 11 includes the semiautomatic-machine operating rate calculator 111, the semiautomatic-machine production plan obtainer 112, the semiautomatic-machine achievement calculator 113, the operator operating rate calculator 114, the operator production plan obtainer 115, the operator achievement calculator 116, and the determiner 117. These functions are implemented by the CPU executing programs stored in the memory. The functions will be described later.

The notifier 16 may include a human-machine interface (HMI) such as a touchscreen, a tablet, an indicator lamp, a buzzer, or any other appropriate device that can provide a notification to the operator W1 on the cell line CL. The notifier 16 corresponds to a notifier in an aspect of the present invention.

The processor 21 may include a common computer including a CPU, a memory, an input device, an output device, and a communication interface.

The notifier 22 may include a personal computer (PC), a tablet, or any other appropriate device that can provide a notification to the manager LL such as a production line leader or production engineering personnel working in the office 20. The notifier 22 is connected to the processor 21 by an appropriate communicator such as Ethernet (registered trademark) or Wi-Fi (registered trademark). The notifier 22 corresponds to a manager notifier in an aspect of the present invention. Operation Prioritizing Process for Operator W1 Performed by Processor 11

A process performed by the processor 11 to determine assignments to the operator W1 will now be described.

The semiautomatic-machine achievement calculator 113 in the processor 11 calculates the target achievement rate of the semiautomatic machine Eq. The semiautomatic-machine achievement calculator 113 corresponds to a first evaluation index calculator in an aspect of the present invention. The target achievement rate of the semiautomatic machine Eq corresponds to a facility productivity evaluation index in an aspect of the present invention.

The target achievement rate of the semiautomatic machine Eq is calculated using Formula 1 below.

$$\text{Target achievement rate} = (\text{recorded operating rate of semiautomatic machine Eq})/(\text{target operating rate of semiautomatic machine Eq}) \quad (1)$$

The target operation rate of the semiautomatic machine is calculated by the semiautomatic-machine production plan obtainer 112 using Formula 2 below. The recorded operating rate of the semiautomatic machine Eq is calculated by the semiautomatic-machine operating rate calculator 111 using Formula 3.

$$\text{Target operating rate of semiautomatic machine Eq} = \text{target production time/planned operating time} \quad (2)$$

$$\text{Recorded operating rate of semiautomatic machine Eq} = \text{recorded production time/recorded operating time} \quad (3)$$

The target production time is calculated by the semiautomatic-machine production plan obtainer 112 using Formula 4 below. The recorded production time is calculated by the semiautomatic-machine operating rate calculator 111 using Formula 5 below.

$$\text{Target production time} = \text{target production quantity} \times \text{processing time of semiautomatic machine Eq} \quad (4)$$

$$\text{Recorded production time = resultant production quantity} \times \text{processing time of}$$

$$\text{semiautomatic machine Eq} \quad (5)$$

The target operating rate, the target production time, the planned operating time, the target production quantity, and the processing time of the semiautomatic machine Eq correspond to facility production plan information in an aspect of the present invention, and the semiautomatic-machine production plan obtainer 112 corresponds to a facility production plan obtainer in an aspect of the present invention. The recorded operating rate, the recorded production time, the recorded operating time, and the resultant production quantity of the semiautomatic machine Eq correspond to facility operation information in an aspect of the present invention.

Similarly, the operator achievement calculator 116 in the processor 11 calculates the target achievement rate for the operator W1 using Formula 6 below. The operator achievement calculator 116 corresponds to a second evaluation index calculator in an aspect of the present invention. The target achievement rate of the operator W1 corresponds to an operator productivity evaluation index in an aspect of the present invention.

$$\text{Target achievement rate = (recorded operating rate of operator W1)/(target}$$

$$\text{operating rate of operator W1)} \quad (6)$$

The target operating rate of the operator W1 is calculated by the operator production plan obtainer 115 using Formula 7 below. The recorded operating rate of the operator W1 is calculated by the operator operating rate calculator 114 using Formula 8 below.

$$\text{Target operating rate of operator W1 = (reference time} \times \text{target production}$$

$$\text{quantity)/planned operating time} \quad (7)$$

$$\text{Recorded operating rate of operator W1 = recorded production time/recorded}$$

$$\text{operating time} \quad (8)$$

The target operating rate, the reference time, the planned operating time, and the target production quantity of the operator W1 correspond to operator production plan information in an aspect of the present invention. The operator production plan obtainer 115 corresponds to an operator production plan obtainer in an aspect of the present invention. The recorded operating rate, the recorded production time, and the recorded operating time of the operator W1 correspond to operator operation information in an aspect of the present invention.

The determiner 117 in the processor 11 determines that the operator W1 is to prioritize improving the operating rate of the operator W1 and proceed to a subsequent process assigned to the operator W1 without returning to the semiautomatic machine Eq for assistance when Formula 9 below holds.

$$\text{Target achievement rate of operator W1 < target achievement rate of}$$

$$\text{semiautomatic machine Eq} \quad (9)$$

The determiner 117 in the processor 11 determines that the operator W1 is to prioritize improving the operating rate of the semiautomatic machine Eq and return to the semiautomatic machine Eq to perform auxiliary operations such as collecting the workpiece finished by the semiautomatic machine Eq and preparing the workpiece for the subsequent operation when Formula 10 below holds.

$$\text{Target achievement rate of operator W1 > target achievement rate of}$$

$$\text{semiautomatic machine Eq} \quad (10)$$

The determiner 117 corresponds to an operation prioritizer in an aspect of the present invention.

The determination using each of the above formulas will be described based on specific numerical examples.

The planned values in this example are a planned operating time of 6 hours = 21600 seconds, a target production quantity of 200, a processing time of 90 seconds per product, and a reference operator time of 80 seconds per product.

The recorded values for a half day (three hours) are a semiautomatic machine resultant production quantity of 80, an operator resultant production quantity of 90, and an operator recorded time of 90 seconds (per product).

Based on the above numerical examples,

the target operating rate of the semiautomatic machine Eq = 90 × 200/21600 = 83%,

the target operating rate of the operator W1 = 80 × 200/21600 = 74%,

the recorded operating rate of the semiautomatic machine Eq = 90 × 80/10800 = 66%, and

the recorded operating rate of the operator W1 = 90 × 90/10800 = 75%.

The above target operating rates and recorded operating rates are input into Formulas 1 and 6 to calculate the respective target achievement rates of the semiautomatic machine Eq and the operator W1 in the manner described below.

The target achievement rate of the semiautomatic machine Eq = 0.66/0.83 = 79%

The target achievement rate of the operator W1 = 0.75/0.74 = 101%

In this example, the target achievement rate of the operator W1 is greater than the target achievement rate of the semiautomatic machine Eq to satisfy the inequality in Formula 10, indicating that improving the operation of the semiautomatic machine Eq is to be prioritized. The determiner 117 in the processor 11 notifies, through the notifier 16, the operator W1 of an action to return to the semiautomatic machine Eq without causing a wait in the semiautomatic machine Eq. The operator W1 may then return to the semiautomatic machine Eq in accordance with the notification for auxiliary operations, instead of proceeding to a subsequent process. This improves the operating rate of the semiautomatic machine Eq to allow production without the operating rates of both the semiautomatic machine Eq and the operator W1 being lowered, and improves productivity.

Second Embodiment

A production management support system 1 according to a second embodiment of the present invention will now be described. The same reference numerals denote the same components as in the first embodiment, and such components will not be described in detail. The components of the production management support system 1 according to the second embodiment are the same as in the production management support system 1 according to the first embodiment. In the production management support system 1 according to the second embodiment, the processor 11 determines the operation to be prioritized by the operator W1 in a manner different from that in the production management support system 1 according to the first embodiment.

In the first embodiment, the target achievement rates of the semiautomatic machine Eq and the operator W1 are used to determine whether to improve the operation of the semiautomatic machine Eq or the operation assigned to the operator W1, or more specifically, whether the operator W1 is to proceed to a subsequent process or to return to the semiautomatic machine Eq. For the same operating rates, any lower operating rate in an immediately preceding time slot is to be increased. In the second embodiment, the target achievement rate obtained in the time slot immediately preceding the determination is used to determine whether to prioritize the operation of the semiautomatic machine Eq or the operation assigned to the operator W1.

More specifically, the determiner 117 in the processor 11 determines that the operator W1 is to prioritize improving the operation assigned to the operator W1 and proceed to a subsequent process assigned to the operator W1 without returning to the semiautomatic machine Eq for assistance when Formula 11 below holds in the time slot immediately preceding the determination.

$$\text{Target achievement rate of operator W1} < \text{target achievement rate of}$$

$$\text{semiautomatic machine Eq} \quad (11)$$

The determiner 117 in the processor 11 determines that the operator W1 is to prioritize improving the operation of the semiautomatic machine Eq and return to the semiautomatic machine Eq when Formula 12 below holds in the immediately preceding time slot.

$$\text{Target achievement rate of operator W1} > \text{target achievement rate of}$$

$$\text{semiautomatic machine Eq} \quad (12)$$

The determination using the above formulas will be described based on specific numerical examples.

As in the first embodiment, the planned values in this example are a planned operating time of 6 hours = 21,600 seconds, a target production quantity of 200, a processing time of 90 seconds per product, and a reference operator time of 80 seconds per product.

The recorded values for a half day (three hours) are a semiautomatic machine resultant production quantity of 40 for the first one hour and of 60 for the remaining two hours, an operator resultant production quantity of 40 for the first one hour and of 65 for the remaining two hours, and an operator recorded time of 90 seconds (per product).

Based on the above numerical examples,

$$\text{the target operating rate of the semiautomatic machine Eq} = 90 \times 200/21600 =$$

$$83\%, \text{ and}$$

$$\text{the target operating rate of the operator W1} = 80 \times 200/21600 = 74\%.$$

For a half day (three hours),

$$\text{the recorded operating rate of the semiautomatic machine Eq} = 90 \times 100/10800$$

$$= 83\%, \text{ and}$$

$$\text{the recorded operating rate of the operator W1} = 90 \times 105/10800 = 87\%.$$

For the entire three-hour period, both the semiautomatic machine Eq and the operator W1 achieve the target operating rates.

However, for the last two hours,

$$\text{the recorded operating rate of the semiautomatic machine Eq} = 90 \times 60/7200 =$$

$$75\%,$$

$$\text{the recorded operating rate of the operator W1} = 90 \times 65/7200 = 81\%.$$

The operating rate of the semiautomatic machine Eq lowers in the last two hours.

The respective target achievement rates of the semiautomatic machine Eq and the operator W1 in the immediately preceding time slot, or more specifically, in the last two hours, are calculated using Formulas 1 and 6.

In the last two hours,

$$\text{the target achievement rate of the semiautomatic machine Eq} = 0.75/0.83 = 90\%,$$

$$\text{the target achievement rate of the operator W1} = 0.81/0.74 = 109\%.$$

The last two hours correspond to a predetermined time slot preceding the determination in an aspect of the present invention. The length of the predetermined time slot may be set as appropriate.

The inequality in Formula 12 holds. The determiner 117 in the processor 11 thus prioritizes improving the operation of the semiautomatic machine Eq and notifies, through the notifier 16, the operator W1 of an action to return to the semiautomatic machine Eq without causing a wait in the semiautomatic machine Eq. The operator W1 may then return to the semiautomatic machine Eq in accordance with the notification, instead of proceeding to the subsequent process. This improves the operating rate of the semiautomatic machine Eq to allow production without the operating rates of both the semiautomatic machine Eq and the operator W1 being lowered, and improves productivity.

Third Embodiment

A production management support system 1 according to a third embodiment of the present invention will now be described. The same reference numerals denote the same components as in the first embodiment and the second embodiment, and such components will not be described in detail. The components of the production management support system 1 according to the third embodiment are the same as in the production management support system 1 according to each of the first embodiment and the second embodiment. In the production management support system 1 according to the third embodiment, the processor 11 determines the operation to be prioritized by the operator W1 in a manner different from that in the production management support system 1 according to each of the first embodiment and the second embodiment.

In the second embodiment, to increase any lower operating rate in the time slot immediately preceding the determination for the same operating rates, the target achievement rate obtained in the immediately preceding time slot is used to determine whether the operation of the semiautomatic machine Eq or the operation assigned to the operator W1 is to be improved first. Similarly, the system in the third embodiment increases any lower operating rate in the time slot immediately preceding the determination for the same operating rates. The target achievement rates are weighted and averaged to determine whether to prioritize the operation of the semiautomatic machine Eq or the operation assigned to the operator W1.

In the third embodiment, the determiner 117 in the processor 11 determines whether to prioritize the operation of the semiautomatic machine Eq or the operation assigned to the operator W1 based on whether the inequality in Formula 9 holds or the inequality in Formula 10 holds for the respective target achievement rates of the semiautomatic machine Eq and the operator W1.

In this example, the determiner 117 in the processor 11 determines whether to prioritize the operation of the semiautomatic machine Eq or the operation assigned to the operator W1 at 11:30 a.m. Table 1 below shows the target achievement rates of the operator W1 and the semiautomatic machine Eq for each 30-minute time slot from 9:00 to 11:30 a.m.

Table 1

| Time slot | Operator target achievement rate (%) | Semiautomatic machine target achievement rate (%) |
|---|---|---|
| 09:00-09:30 | 90 | 90 |
| 09:30-10:00 | 90 | 90 |
| 10:00-10:30 | 70 | 80 |

(continued)

| Time slot | Operator target achievement rate (%) | Semiautomatic machine target achievement rate (%) |
|---|---|---|
| 10:30-11:00 | 60 | 80 |
| 11:00-11:30 | 60 | 75 |

The target achievement rate of the operator W1 and the target achievement rate of the semiautomatic machine Eq are each calculated based on a weighted moving average that uses a greater weight on a value obtained in a more closely preceding time slot. More specifically, the weights for the target achievement rates in the time slots of 09:00 to 09:30, 09:30 to 10:00, 10:00 to 10:30, 10:30 to 11;00, and 11:00 to 11:30 are respectively 1, 2, 3, 4, and 5 with a more closely preceding time slot having a greater weight.

The target achievement rate of the operator W1 and the target achievement rate of the semiautomatic machine Eq calculated based on the weighted moving average with a weight set in this manner are expressed by the equations below. The weighted moving average with set weights corresponds to weighting in response to a length of time preceding the determination in an aspect of the present invention.

$$\text{The target achieving rate of the operator W1} = (90 + 90 \times 2 + 70 \times 3 + 60 \times 4 + 60 \times 5)/(1 + 2 + 3 + 4 + 5) = 68 \ (\%)$$

$$\text{The target achieving rate of the semiautomatic machine Eq} = (90 + 90 \times 2 + 80 \times 3 + 80 \times 4 + 75 \times 5)/(1 + 2 + 3 + 4 + 5) = 80 \ (\%)$$

In this example, the target achievement rate of the operator W1 is less than the target achievement rate of the semiautomatic machine Eq to satisfy the inequality in Formula 9, indicating that the operation assigned to the operator W1 is to be prioritized. The determiner 117 in the processor 11 thus determines that the operator W1 is to proceed to a subsequent process without returning to the semiautomatic machine Eq. Although the determiner 117 in the processor 11 may notify, through the notifier 16, the operator W1 of an action to proceed to a subsequent process without returning to the semiautomatic machine Eq, the operator W1 normally proceeds to the subsequent process without receiving any notification. Thus, the notification may not be provided. In the manner described above, the operator W1 proceeds to the subsequent process to prioritize improving the operating rate of the operator W1. This allows production without the operating rates of both the semiautomatic machine Eq and the operator W1 being lowered, and improves productivity.

Fourth Embodiment

A production management support system 1 according to a fourth embodiment of the present invention will now be described. The same reference numerals denote the same components as in the first to third embodiments, and such components will not be described in detail. The components of the production management support system 1 according to the fourth embodiment are the same as in the production management support system 1 according to the first embodiment. In the production management support system 1 according to the fourth embodiment, the determiner 117 in the processor 11 determines the operation to be prioritized by the operator W1 in a manner different from that in the production management support system 1 according to the first embodiment.

In the fourth embodiment, in response to the target achievement rates of the semiautomatic machine Eq and the operator W1 being below the respective thresholds and possibly failing to achieve a planned production quantity, the processor 11 causes, through the processor 21, the notifier 22 to provide an error notification to the manager LL, such as a production line leader.

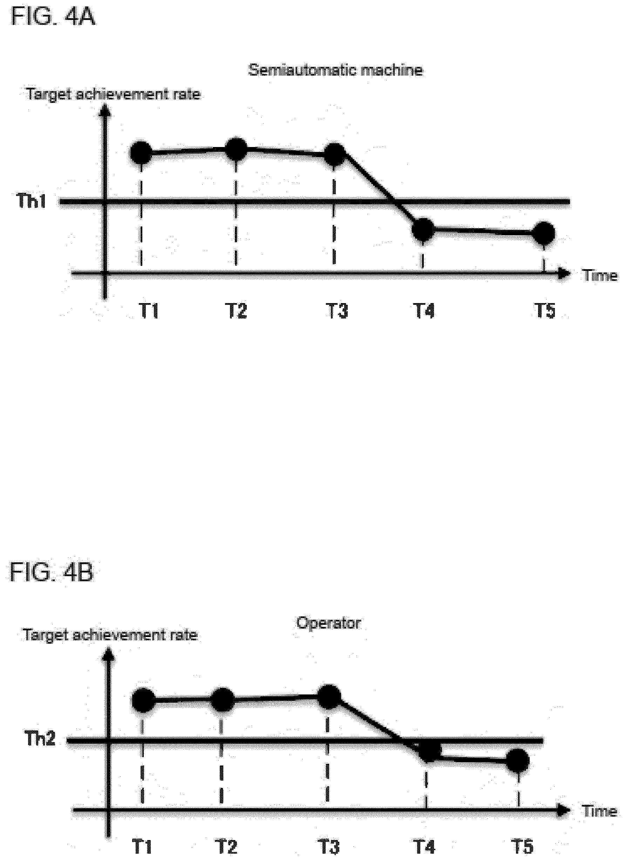

More specifically, a threshold Th1 is set for the target achievement rate of the semiautomatic machine Eq, and a threshold Th2 is set for the target achievement rate of the operator W1. FIG. 4A is a graph showing changes in the target achievement rate of the semiautomatic machine Eq. The horizontal axis indicates time, and the vertical axis indicates the target achievement rate. Similarly, FIG. 4B is a graph showing changes in the target achievement rate of the operator W1. The horizontal axis indicates time, and the vertical axis indicates the target achievement rate. As shown in FIG. 4A, from time T3 to time T4, the target achievement rate of the semiautomatic machine Eq decreases below the threshold Th1. As shown in FIG. 4B, from time T3 to time T4, the target achievement rate of the operator W1 similarly decreases below the threshold Th2. For example, as shown in FIGs. 4A and 4B, in response to the target achievement rates of both the semiautomatic machine Eq and the operator W1 being below the respective thresholds Th1 and Th2 at two consecutive times, the determiner 117 in the processor 11 notifies the manager LL such as a production line leader, who is working in the office 20, of the error using the display of a PC including the notifier 22 displaying the error or using a stack light including the notifier 22 to be on or to blink. This allows the manager LL, such as a production line leader, to notice an abnormality in the cell line CL and be proactive in producing the planned quantity. The determiner 117 corresponds to a lower productivity determiner in an aspect of the present invention.

The determination as to whether the target achievement rates of both the semiautomatic machine Eq and the operator W1 are below the respective thresholds Th1 and Th2 at two consecutive times corresponds to a determination as to whether a predetermined condition indicating lower productivity is satisfied in an aspect of the present invention.

Fifth Embodiment

A production management support system 1 according to a fifth embodiment of the present invention will now be described. The same reference numerals denote the same components as in the first to fourth embodiments, and such components will not be described in detail. The components of the production management support system 1 according to the fifth embodiment are the same as in the production management support system 1 according to the first embodiment. In the production management support system 1 according to the fifth embodiment, the determiner 117 in the processor 11 determines the operation to be prioritized by the operator W1 in a manner different from that in the production management support system 1 according to the first embodiment.

A stop of the semiautomatic machine Eq, such as an unexpected stop, can cause lower estimation of the operating rate. The determiner 117 in the processor 11 thus uses a target achievement rate calculated by excluding the duration of such an unexpected stop to determine whether the operation of the semiautomatic machine Eq or the operation assigned to the operator W1 is to be improved. The semiautomatic machine Eq generates an abnormal signal when stopping unexpectedly. The processor 11 receives the abnormal signal through the semiautomatic-machine data provider 12 and the semiautomatic-machine data collector 13 to detect the unexpected stop of the semiautomatic machine Eq.

The embodiment will be described based on specific numerical examples.

As in the first embodiment, the planned values in this example are a planned operating time of 6 hours = 21600 seconds, a target production quantity of 200, a processing time of 90 seconds per product, and a reference operator time of 80 seconds per product.

The recorded values for a half day (three hours) are a stop of the semiautomatic machine Eq for the first 30 minutes and a production quantity of 90 for the following 2.5 hours, an operator resultant production quantity of 80, and an operator recorded time of 90 seconds (per product).

The first 30 minutes corresponds to a stop time of the facility.

Based on the above numerical examples,

$$\text{the target operating rate of the semiautomatic machine Eq} = 83\%,$$

$$\text{the target operating rate of the operator W1} = 74\%.$$

For a half day (three hours),

$$\text{the recorded operating rate of the semiautomatic machine Eq} = 90 \times 90/10800 = 75\%,$$

$$\text{the recorded operating rate of the operator W1} = 90 \times 80/10800 = 66\%.$$

In this example, the semiautomatic machine Eq is stopped for the first 30 minutes of a half day (three hours). The 30 minutes is excluded, and the recorded operating rates are calculated for the recorded operating time of 2.5 hours (9000 seconds) in the manner described below.

The recorded operating rate of the semiautomatic machine Eq = 90 × 90/9000 = 90%,

The recorded operating rate of the operator W1 remains the same at 66%.

The target achievement rates after the semiautomatic machine Eq returns from the stop are calculated in the manner described below.

The target achievement rate of the semiautomatic machine Eq = 0.90/0.83 = 108%,

the target achievement rate of the operator W1 = 0.66/0.74 = 89%.

The inequality in Formula 9 holds. The determiner 117 in the processor 11 thus determines that the operator W1 is to prioritize improving the operation assigned to the operator W1 and proceed to a subsequent process assigned to the operator W1, instead of returning to the semiautomatic machine Eq for assistance. Although the determiner 117 in the processor 11 may notify, through the notifier 16, the operator W1 of an action to proceed to a subsequent process without returning to the semiautomatic machine Eq, the operator W1 normally proceeds to the subsequent process without receiving any notification. Thus, the notification may not be provided. In the manner described above, the operator W1 proceeds to the subsequent process to prioritize improving the operation assigned to the operator W1. This allows production without the operating rates of both the semiautomatic machine Eq and the operator W1 being lowered, and improves productivity. Modifications

The target operating rate of the operator W1 set in the above embodiments varies depending on the skill level of the operator W1. The target operating rate may thus be set for each operator W1, and the determiner 117 in the processor 11 may calculate, based on the target operating rate, the target achievement rates of the semiautomatic machine Eq and the operator W1 to determine whether to prioritize the operation of the semiautomatic machine Eq or the operation assigned to the operator W1.

The target operating rate changes in response to the change in the type or the model of the product PD. The target achievement rate may thus be calculated for each type or each model.

Past target achievement rates, such as the target achievement rate of the previous day or of the day before the previous day may be stored for predicting the target achievement rate for the day. The predicted target achievement rate may be used as the threshold for providing the notification in the fourth embodiment. Appendix 1

A production management support system (1) for supporting management of a production process including a process assigned to an operator (W1) and a process assigned to a facility (Eq), the process assigned to the facility (Eq) including an auxiliary operation performed by a human, the production management support system (1) comprising:

> a facility operation information obtainer (12, 13, 111) configured to obtain facility operation information about an operating state of the facility (Eq);
> an operator operation information obtainer (14, 15, 114) configured to obtain operator operation information about an operating state of the operator (W1);
> an operation prioritizer (117) configured to determine, based on the facility operation information and the operator operation information, whether to prioritize an operation associated with the process assigned to the operator or the auxiliary operation; and
> a notifier (16) configured to notify the operator of a determination that the auxiliary operation is prioritized.

REFERENCE SIGNS LIST

1        production management support system
12      semiautomatic machine data provider
13      semiautomatic-machine data collector

14     imager
15     image analyzer
111    semiautomatic-machine operating rate calculator
114    operator operating rate calculator
Eq    semiautomatic machine
W1   operator

**Claims**

1. A production management support system (1) for supporting management of a production process including a process assigned to an operator (W1) and a process assigned to a facility (Eq), the process assigned to the facility (Eq) including an auxiliary operation performed by a human, the production management support system (1) comprising:

   a facility operation information obtainer (12, 13, 111) configured to obtain facility operation information about an operating state of the facility (Eq);
   an operator operation information obtainer (14, 15, 114) configured to obtain operator operation information about an operating state of the operator (W1);
   an operation prioritizer (117) configured to determine, based on the facility operation information and the operator operation information, whether to prioritize an operation associated with the process assigned to the operator (W1) or the auxiliary operation; and
   a notifier (16) configured to notify the operator (W1) of a determination that the auxiliary operation is prioritized.

2. The production management support system (1) according to claim 1, further comprising:

   a facility production plan obtainer (112) configured to obtain facility production plan information being production plan information about the facility (Eq);
   an operator production plan obtainer (115) configured to obtain operator production plan information being production plan information about the operator (W1);
   a first evaluation index calculator (113) configured to calculate, based on the facility operation information and the facility production plan information, a facility productivity evaluation index to evaluate productivity of the facility (Eq); and
   a second evaluation index calculator (116) configured to calculate, based on the operator operation information and the operator production plan information, an operator productivity evaluation index to evaluate productivity of the operator (W1),
   wherein the operation prioritizer (117) determines, based on the facility productivity evaluation index and the operator productivity evaluation index, whether to prioritize the operation associated with the process assigned to the operator (W1) or the auxiliary operation.

3. The production management support system (1) according to claim 2, wherein
   the operation prioritizer (117) determines, based on the facility productivity evaluation index and the operator productivity evaluation index obtained in a predetermined time slot preceding the determination, whether to prioritize the operation associated with the process assigned to the operator (W1) or the auxiliary operation.

4. The production management support system (1) according to claim 2, wherein
   the operation prioritizer (117) determines, based on the facility productivity evaluation index and the operator productivity evaluation index weighted based on a length of time preceding the determination, whether to prioritize the operation associated with the process assigned to the operator (W1) or the auxiliary operation.

5. The production management support system (1) according to any one of claims 1 to 4, wherein
   the operation prioritizer (117) determines whether to prioritize the operation associated with the process assigned to the operator (W1) or the auxiliary operation based on the facility operating information excluding a stop time of the facility (Eq).

6. The production management support system (1) according to claim 1, further comprising:

   a first evaluation index calculator (113) configured to calculate a facility productivity evaluation index to evaluate productivity of the facility (Eq) based on the facility operation information and production plan information about the facility (Eq);

a second evaluation index calculator (116) configured to calculate an operator productivity evaluation index to evaluate productivity of the operator (W1) based on the operator operation information and production plan information about the operator (W1);

a lower productivity determiner (117) configured to determine whether the facility productivity evaluation index and the operator productivity evaluation index satisfy a predetermined condition indicating lower productivity; and

a manager notifier (22) configured to notify a manager (LL) of a determination that the predetermined condition is satisfied.

**FIG. 1**

FIG. 2

FIG. 3

EP 4 276 718 A1

FIG. 4A

FIG. 4B

Europäisches
Patentamt
European
Patent Office
Office européen
des brevets

# EUROPEAN SEARCH REPORT

Application Number

**EP 23 16 9959**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/210933 A1 (KOLODNER YOAV [IL] ET AL) 2 July 2020 (2020-07-02) * paragraphs [0006], [0116], [0117] * ----- | 1-6 | INV. G06Q10/0631 G06Q10/0639 G06Q50/04 |
| X | WO 2021/154320 A1 (IYENGAR PRASHANTH [US]) 5 August 2021 (2021-08-05) * paragraphs [0005], [0027] – [0033], [0068], [0069]; figure 3 * ----- | 1-6 | |
| X | US 2014/278690 A1 (AGARWAL SHIVALI [IN] ET AL) 18 September 2014 (2014-09-18) * paragraphs [0004], [0005], [0017] – [0040]; figure 2 * ----- | 1-6 | |

TECHNICAL FIELDS
SEARCHED      (IPC)

G06Q

The present search report has been drawn up for all claims

| Place of search | Date of completion of the search | Examiner |
|---|---|---|
| Munich | 11 September 2023 | González, Gonzalo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................

& : member of the same patent family, corresponding
    document

EPO FORM 1503 03.82 (P04C01)

**EP 4 276 718 A1**

## ANNEX TO THE EUROPEAN SEARCH REPORT
## ON EUROPEAN PATENT APPLICATION NO.

EP 23 16 9959

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2023

| Patent document cited in search report | | Publication date | Patent family member(s) | | Publication date |
|---|---|---|---|---|---|
| US 2020210933 | A1 | 02-07-2020 | US | 2020210918 A1 | 02-07-2020 |
| | | | US | 2020210919 A1 | 02-07-2020 |
| | | | US | 2020210921 A1 | 02-07-2020 |
| | | | US | 2020210931 A1 | 02-07-2020 |
| | | | US | 2020210932 A1 | 02-07-2020 |
| | | | US | 2020210933 A1 | 02-07-2020 |
| | | | US | 2020210936 A1 | 02-07-2020 |
| | | | US | 2020210937 A1 | 02-07-2020 |
| | | | US | 2020210938 A1 | 02-07-2020 |
| | | | US | 2020210939 A1 | 02-07-2020 |
| | | | US | 2020210943 A1 | 02-07-2020 |
| | | | US | 2020210959 A1 | 02-07-2020 |
| | | | US | 2020210961 A1 | 02-07-2020 |
| | | | US | 2020210962 A1 | 02-07-2020 |
| | | | US | 2020210963 A1 | 02-07-2020 |
| | | | US | 2020210964 A1 | 02-07-2020 |
| | | | US | 2020210965 A1 | 02-07-2020 |
| | | | WO | 2020140038 A1 | 02-07-2020 |
| WO 2021154320 | A1 | 05-08-2021 | EP | 4097577 A1 | 07-12-2022 |
| | | | US | 2021374423 A1 | 02-12-2021 |
| | | | US | 2021383532 A1 | 09-12-2021 |
| | | | US | 2022044169 A1 | 10-02-2022 |
| | | | WO | 2021154320 A1 | 05-08-2021 |
| US 2014278690 | A1 | 18-09-2014 | US | 2014278689 A1 | 18-09-2014 |
| | | | US | 2014278690 A1 | 18-09-2014 |
| | | | WO | 2014139729 A1 | 18-09-2014 |

EPO FORM P0459

For more details about this annex : see Official Journal of the European Patent Office, No. 12/82

**REFERENCES CITED IN THE DESCRIPTION**

**Patent documents cited in the description**

- JP 2021093957 A
- JP 2015119646 A